(19) Europäisches Patentamt
European Patent Office
Office européen des brevets

(11) EP 4 806 849 A1

(12) **EUROPEAN PATENT APPLICATION**
published in accordance with Art. 153(4) EPC

(43) Date of publication:
**16.09.2026 Bulletin 2026/38**

(21) Application number: **24888405.8**

(22) Date of filing: **18.09.2024**

(51) International Patent Classification (IPC):
***C02F 1/00** (2023.01)* ***C02F 3/12** (2023.01)*

(52) Cooperative Patent Classification (CPC):
**C02F 1/00; C02F 3/12**

(86) International application number:
**PCT/JP2024/033268**

(87) International publication number:
**WO 2025/100105 (15.05.2025 Gazette 2025/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.11.2023 JP 2023191699**

(71) Applicant: **Kurita Water Industries Ltd.**
**Tokyo 164-0001 (JP)**

(72) Inventors:
- **SUZUKI, Mizuki**
  **Tokyo 164-0001 (JP)**
- **OOKI, Kouichi**
  **Tokyo 164-0001 (JP)**
- **TAKEBAYASHI, Satoshi**
  **Tokyo 164-0001 (JP)**

(74) Representative: **Hoffmann Eitle**
**Patent- und Rechtsanwälte PartmbB**
**Arabellastraße 30**
**81925 München (DE)**

# (54) METHOD FOR ESTIMATING WASTEWATER LOAD AND METHOD FOR TREATING WASTEWATER

(57) Provided are: a method for treating wastewater that allows the amount of industrial waste produced to be reduced by mixing a concentrated waste liquid with wastewater and performing wastewater treatment; and a method for precisely estimating the wastewater load at a wastewater inlet section of wastewater treatment equipment that treats a mixed liquid of wastewater and a concentrated waste liquid. The invention estimates the wastewater load at a wastewater treatment inlet section of wastewater treatment equipment that treats a mixed liquid resulting from the confluence of wastewater and a concentrated waste liquid. The invention includes: measuring a first pollution load of the wastewater; estimating, on the basis of the first pollution load, a pollution load derived from wastewater at a confluence point of the wastewater and the concentrated waste liquid, or at a predetermined position downstream of the confluence point; measuring a second pollution load of the concentrated waste liquid; estimating, on the basis of the second pollution load, a pollution load of the concentrated waste liquid at the confluence point or the predetermined position; and estimating the wastewater load on the basis of the estimated value of the pollution load derived from wastewater and the estimated value of the pollution load of the concentrated waste liquid at the confluence point or the predetermined position.

Calculation unit
Wastewater
Adjustment tank
Wastewater treatment equipment
Concentrated waste liquid
Concentrated waste liquid tank
FI
P
1
3
4
5
6
10
11
12
17
18
19
20
21
23
24
25
26

FIG. 1

EP 4 806 849 A1

## Description

Technical Field

The present invention relates to a method for estimating the wastewater load at a wastewater treatment inlet section of wastewater treatment equipment, a method for treating wastewater that stabilizes wastewater treatment by adjusting the inflow rate to wastewater treatment based on the estimated wastewater load, and a method for reducing the amount of industrial waste.

Background Art

Wastewater discharged from manufacturing plants for beverages, food, and other products often experiences significant fluctuations in concentration and wastewater volume due to factors such as the manufactured products, production volume, and elapsed time for cleaning production lines. Optimal operating conditions for wastewater treatment often differ according to wastewater load, and large fluctuations in wastewater load may affect treatment conditions.

In particular, organic wastewater generally undergoes biological treatment such as aerobic treatment or anaerobic treatment as wastewater treatment. However, in the case of large wastewater load, the wastewater load may exceed the processing capacity of organisms and cause biological treatment to fail, which potentially causes problems such as deterioration of the quality of the treated water.

Further, in physicochemical treatment such as treatment based on Fenton reaction or adsorption, the required amount of chemicals or adsorbents to be added changes. Therefore, it is important to understand fluctuations in the load of wastewater flowing into the treatment equipment.

Conventionally, the operator collects and analyzes wastewater periodically to understand the wastewater load at the wastewater treatment inlet section, and manually takes countermeasures such as emergency evacuation to another tank, dilution, or reduction of the inflow rate to wastewater treatment when there is high-load wastewater flowing in. This method, however, requires constant manual operation, making continuous measurement impossible, and the inflow of high-load wastewater may be overlooked or countermeasures may be delayed, leading to failure of the wastewater treatment and deterioration of the quality of the treated water. Therefore, it is very important to continuously understand the load of wastewater that flows in and take prompt countermeasures to prevent wastewater treatment from failure.

In addition, it has been confirmed that a high-load waste liquid is treated as industrial waste without performing wastewater treatment. For example, Patent Document 1 (Japanese Patent Application Laid-Open No. 11-197664) describes that conventionally a waste liquid with extremely high pollution load that may cause wastewater treatment to fail, such as the pickled plum brine processing liquid generated during pickled plum processing (hereinafter referred to as "concentrated waste liquid"), is generally discarded as industrial waste. However, the method of discarding concentrated waste liquid as industrial waste has issues such as high costs for industrial waste treatment and global environmental destruction due to carbon dioxide generated from industrial waste, and there has been a demand to reduce the amount of concentrated waste liquid for industrial waste treatment.

Patent Document 2 (Japanese Patent Application Laid-Open No. 2006-334491) describes a method for controlling the amount of food residue input to a normal wastewater treatment system based on the measured TOC concentration, in order to process food residue into a form that can be treated by wastewater treatment without industrial waste treatment to reduce the amount of industrial waste, and to prevent failure of wastewater treatment. However, Patent Document 2 clearly states that the TOC concentration is measured in an adjustment tank after food residue merges with the normal wastewater treatment system, and the input amount of food residue is adjusted so that the TOC concentration falls within a predetermined range. In the case where the TOC concentration in the normal wastewater treatment system rises suddenly, the TOC concentration may still exceed the predetermined range at the time when the measured value is obtained.

Related Art Documents

Patent Documents

Patent Document 1: Japanese Patent Application Laid-Open No. 11-197664
Patent Document 2: Japanese Patent Application Laid-Open No. 2006-334491

SUMMARY OF THE INVENTION

Problem to be Solved by the Invention

The present invention has been made in view of the above actual situations, and aims to provide a method for treating wastewater that can reduce the amount of industrial waste by mixing a concentrated waste liquid, which is conventionally discarded as industrial waste, with wastewater and performing wastewater treatment, and a method for accurately estimating the wastewater load at a wastewater inlet section of wastewater treatment equipment that treats a mixed liquid of wastewater and a concentrated waste liquid.

Means for Solving the Problem

The method for estimating wastewater load according to the present invention is a method for estimating a wastewater load at a wastewater treatment inlet section of wastewater treatment equipment that treats a mixed liquid resulting from confluence of wastewater and a concentrated waste liquid, the method including measuring a first pollution load of the wastewater; estimating a pollution load derived from the wastewater at a confluence point of the wastewater and the concentrated waste liquid, or at a predetermined position downstream of the confluence point based on the first pollution load; measuring a second pollution load of the concentrated waste liquid; estimating a pollution load of the concentrated waste liquid at the confluence point or the predetermined position based on the second pollution load; and estimating the wastewater load based on an estimated value of the pollution load derived from the wastewater and an estimated value of the pollution load of the concentrated waste liquid at the confluence point or the predetermined position.

In one aspect of the present invention, the wastewater is sent to the wastewater treatment equipment via an adjustment tank, the confluence point is located on a downstream side of the adjustment tank, and the method includes measuring the first pollution load on an upstream side of the adjustment tank.

In one aspect of the present invention, the method includes measuring a first flow rate of wastewater flowing into the adjustment tank; and estimating a pollution load of the wastewater at the confluence point using the first pollution load and the first flow rate.

In one aspect of the present invention, the concentrated waste liquid is sent from a concentrated waste liquid tank to the confluence point, and the method includes measuring the second pollution load in the concentrated waste liquid tank; and estimating a pollution load of the concentrated waste liquid at the confluence point from the second pollution load.

The method for treating wastewater according to the present invention does not send the concentrated waste liquid to the confluence point in the case where the wastewater load estimated by the above method is equal to or greater than a predetermined value.

In one aspect of the present invention, the concentrated waste liquid is sent to the confluence point at a flow rate that does not exceed the predetermined value in the case where the estimated wastewater load is less than the predetermined value.

Effects of the Invention

According to the present invention, the amount of industrial waste can be reduced by mixing a concentrated waste liquid with wastewater and performing wastewater treatment. Further, according to the present invention, the wastewater load at a wastewater inlet section of wastewater treatment equipment that treats a mixed liquid of wastewater and a concentrated waste liquid can be estimated accurately.

BRIEF DESCRIPTION OF THE DRAWINGS

[FIG. 1] is a schematic configuration diagram of a wastewater treatment system according to the first embodiment of the present invention.

[FIG. 2] is a schematic configuration diagram of a wastewater treatment system according to the second embodiment of the present invention.

[FIG. 3] is a schematic configuration diagram of a wastewater treatment system according to the third embodiment of the present invention.

[FIG. 4] is a schematic configuration diagram of a wastewater treatment system according to the fourth embodiment of the present invention.

[FIG. 5] is a schematic configuration diagram of a wastewater treatment system according to the fifth embodiment of the present invention.

DESCRIPTION OF THE EMBODIMENTS

Hereinafter, embodiments of the present invention will be described based on the drawings.

[First Embodiment]

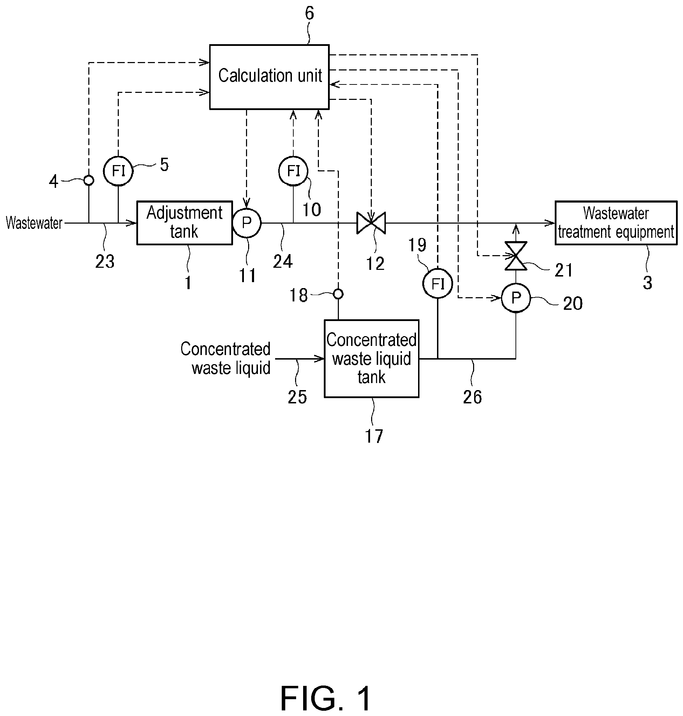

As shown in FIG. 1, a wastewater treatment system according to the first embodiment of the present invention includes an adjustment tank 1, wastewater inlet piping 23 connected to the upstream side of the adjustment tank 1 and transferring wastewater to the adjustment tank 1, a first pollution load measurement unit 4 provided in the wastewater inlet piping 23 and measuring the pollution load of wastewater flowing into the adjustment tank 1, a first flow rate measurement unit 5 similarly provided in the wastewater inlet piping 23 and measuring the flow rate of wastewater flowing into the adjustment tank 1, wastewater outlet piping 24 for wastewater discharged from the adjustment tank 1 to flow to wastewater treatment, a concentrated waste liquid tank 17 storing a concentrated waste liquid, concentrated waste liquid inlet piping 25 connected to the upstream side of the concentrated waste liquid tank 17 and transferring the concentrated waste liquid to the concentrated waste liquid tank 17, a second pollution load measurement unit 18 provided in the concentrated waste liquid tank 17 and measuring the pollution load of the concentrated waste liquid, concentrated waste liquid outlet piping 26 merging the concentrated waste liquid discharged from the concentrated waste liquid tank 17 with the wastewater outlet piping 24, a second flow rate measurement unit 19 provided in the concentrated waste liquid outlet piping 26 and measuring the flow rate of the concentrated waste liquid discharged from the concentrated waste liquid tank 17, wastewater treatment equipment 3 treating a mixed liquid of the concentrated waste liquid and the wastewater, a third flow rate measurement unit 10 provided upstream of a confluence point with the concentrated waste liquid in the wastewater outlet piping 24 and measuring the flow rate of the wastewater discharged from the adjustment tank 1, and a calculation unit 6 estimating the wastewater load at an inlet section of the wastewater treatment equipment 3 (downstream of the confluence point with the concentrated waste liquid in the wastewater outlet piping 24). The calculation unit 6 is, for example, a computer. The calculation unit 6 acquires measurement results from various measuring devices. Further, the calculation unit 6 controls opening and closing of valves and start and stop of pumps described later.

Wastewater from a single series flows into the adjustment tank 1, or wastewater from multiple series merges and flows into the wastewater inlet piping 23 simultaneously or at different timings. The water quality of wastewater flowing into the adjustment tank 1 is not particularly limited, but for example, in the case where wastewater continues for a certain time or longer (for example, 20% or more of the entire wastewater inflow time) under at least one condition of water temperature of 40°C or higher, pH of 4 or lower or pH of 9 or higher, and ORP of 750 mV or higher, slime adhesion to the first pollution load measurement unit 4 and the first flow rate measurement unit 5 is suppressed, and measurement failures due to slime can be prevented, making it easier to achieve the effects of the present invention.

The first pollution load measurement unit 4 measures the pollution load of wastewater flowing into the adjustment tank 1 periodically at relatively short time intervals or continuously. The present embodiment illustrates an example of measuring TOC concentration as a pollution load, but the measurement item is not limited to TOC concentration, and may be an indicator showing other pollution loads such as specific substance concentration, COD concentration, and SS. Additionally, the pollution load to be measured includes items that correlate with pollution load, such as electrical conductivity and Brix sugar content.

The first pollution load measurement unit 4 measures the pollution load (TOC concentration) by immersing an instrument in the wastewater upstream of the adjustment tank 1 and, in the case of multiple series, downstream of the confluence point of wastewater from each series.

The adjustment tank 1 is defined as a tank having an HRT (hydraulic retention time) of 30 minutes or longer for the purpose of adjusting and mitigating fluctuations in water quality and water volume. The specifications such as the capacity of the adjustment tank 1 are not particularly limited. Multiple adjustment tanks 1 may be arranged in parallel.

The first flow rate measurement unit 5 that measures the flow rate of wastewater flowing into the adjustment tank 1 may be a flow meter, or in the case of the adjustment tank 1 operating with batch flow, may calculate the flow rate of wastewater from the water level increase per unit time in the adjustment tank 1. In the case of the adjustment tank 1 operating with continuous flow, the flow rate of wastewater flowing into the adjustment tank 1 may be calculated from the sum of the change in storage amount in the adjustment tank 1 and the discharge flow rate from the adjustment tank 1. In this case, it is required to install a level meter in the adjustment tank 1 as the first flow rate measurement unit 5.

The concentrated waste liquid tank 17 is a tank that stores a concentrated waste liquid with such a high pollution load that cannot be treated by wastewater treatment alone. A concentrated waste liquid from a single series flows into the concentrated waste liquid tank 17, or concentrated waste liquids from multiple series are merged into the concentrated waste liquid inlet piping 25 and flows in simultaneously or at different timings. The concentrated waste liquid has a pollution load higher than the maximum design value of pollution load fluctuation for wastewater flowing into the adjustment tank 1. The specifications and number of the concentrated waste liquid tanks 17, such as capacity, are not particularly limited. Additionally, the concentrated waste liquid tank 17 may not be a permanent tank, but may be a container such as a mobile

container, and a container for storing concentrated waste liquid at the site where the concentrated waste liquid is discharged may be moved into the wastewater treatment system of the present invention and temporarily installed for performing treatment. Alternatively, a container for storing concentrated waste liquid may be moved into the wastewater treatment system of the present invention so that the concentrated waste liquid may be directly introduced from the container into the permanent concentrated waste liquid tank 17. In these cases, the concentrated waste liquid inlet piping 25 is not required. The concentrated waste liquid is, for example, a pickled plum brine processing liquid generated during pickled plum processing, a waste syrup liquid generated during beverage production, a plating waste liquid, or the like.

The second pollution load measurement unit 18 measures the pollution load of the concentrated waste liquid in the concentrated waste liquid tank 17 periodically at relatively short time intervals or continuously. For example, the second pollution load measurement unit 18 measures the pollution load of the same measurement item as the first pollution load measurement unit 4. As described above, in the present embodiment, TOC concentration is measured as the pollution load.

The method for measuring the TOC concentration of the concentrated waste liquid is not particularly limited, and the TOC concentration may be measured by performing a dilution operation, or other correlated indicators may be measured. The second pollution load measurement unit 18 may measure the pollution load (TOC concentration) by immersing an instrument in the concentrated waste liquid.

The second flow rate measurement unit 19 measures the flow rate of concentrated waste liquid flowing from the concentrated waste liquid tank 17 into the wastewater treatment equipment 3. The second flow rate measurement unit 19 may measure the flow rate with a flow meter, or may calculate the flow rate using the water level decrease per unit time in the concentrated waste liquid tank 17. In this case, it is required to install a level meter in the concentrated waste liquid tank 17 as the second flow rate measurement unit 19. In the case where the flow rate of concentrated waste liquid is fixed at a specified value, the measurement can be omitted.

A transfer pump 11 provided in the wastewater outlet piping 24 sends the wastewater in the adjustment tank 1 to the wastewater treatment equipment 3. The third flow rate measurement unit 10, which is also provided in the wastewater outlet piping 24, measures the flow rate of wastewater discharged from the adjustment tank 1. The third flow rate measurement unit 10 may be a flow meter, or may calculate the flow rate using the water level decrease per unit time in the adjustment tank 1. In this case, it is required to install a level meter in the adjustment tank 1 as the third flow rate measurement unit 10.

A transfer pump 20 provided in the concentrated waste liquid outlet piping 26 sends the concentrated waste liquid in the concentrated waste liquid tank 17 to the wastewater flowing through the wastewater outlet piping 24. The wastewater and the concentrated waste liquid merge and mix, and the mixed liquid is sent to the wastewater treatment equipment 3 through the wastewater outlet piping 24. In the example shown in FIG. 1, the wastewater and the concentrated waste liquid are mixed on the downstream side of the third flow rate measurement unit 10.

The wastewater treatment equipment 3 performs treatment to remove contaminants and oil components contained in the mixed liquid resulting from confluence and mixing of the concentrated waste liquid and wastewater. The methods and number of systems for treating the mixed liquid are not particularly limited. Examples of treatment methods include so-called biological treatment including aerobic and anaerobic treatment, physicochemical treatment such as Fenton treatment and activated carbon treatment, or neutralization treatment and coagulation separation treatment depending on the wastewater.

The calculation unit 6 estimates the TOC concentration at the outlet of the adjustment tank 1 using the TOC concentration measured by the pollution load measurement unit 4 and the flow rate measured by the first flow rate measurement unit 5.

Methods for estimating the TOC concentration at the outlet of the adjustment tank 1 using the TOC concentration measured by the pollution load measurement unit 4 (TOC concentration measured upstream of the adjustment tank 1) and the flow rate measured by the first flow rate measurement unit 5 can be performed with various proposed concentration calculation models for retention tanks. For example, different estimation methods as described below can be used depending on whether the adjustment tank 1 operates with continuous flow or batch flow.

<In the Case of Continuous Flow>

Estimation Method (1)-1

The TOC concentration (mg/L) at the outlet of the adjustment tank 1 is estimated by calculating the moving average of the TOC concentration measured upstream of the adjustment tank 1 over a time period close to the retention time in the adjustment tank 1. For example, in the case of the retention time in the adjustment tank 1 being 50 minutes, the average of TOC concentration measurement results from the present time to 50 minutes ago can be regarded as the TOC concentration discharged from the adjustment tank 1.

Estimation Method (2)-1

The change in TOC concentration of the wastewater flowing into the adjustment tank 1 is estimated using a fully mixing tank model from the TOC concentration and flow rate measured upstream of the adjustment tank 1, and the TOC concentration (mg/L) at the outlet of the adjustment tank 1 is estimated.

<In the Case of Batch Flow>

Estimation Method (3)-1

The TOC concentration (mg/L) at the outlet of the adjustment tank 1 is estimated by dividing the total TOC weight (g) flowing into the adjustment tank 1 by the total water volume ($m^3$) flowing into the adjustment tank 1. In order to accurately grasp the total TOC weight and total water volume that have flowed into the adjustment tank 1, it is desirable to obtain the inlet valve opening/closing signals or pump start/stop signals of the adjustment tank 1, and integrate the TOC concentration and water volume from inlet valve "open" to "close" or during the time the pump is operating, to calculate the load. In the case where it is difficult to obtain valve opening/closing signals or pump start/stop signals, the timing of wastewater flowing into the adjustment tank 1 may be understood from the change in water level of the adjustment tank 1.

The calculation unit 6 uses the TOC concentration at the outlet of the adjustment tank 1 estimated by any of the above estimation methods (1)-1, (2)-1, and (3)-1, the flow rate at the outlet of the adjustment tank 1 measured by the third flow rate measurement unit 10, the TOC concentration of the concentrated waste liquid measured by the second pollution load measurement unit 18, and the flow rate of the concentrated waste liquid merging to join the wastewater treatment and measured by the second flow rate measurement unit 19, to estimate the wastewater load (kg-TOC/day) at the inlet section (wastewater treatment inlet section) of the wastewater treatment equipment 3 by the following formula 1.

Formula 1: Wastewater load (kg-TOC/day) = {TOC concentration of wastewater at outlet of adjustment tank (mg/L) $\times$ flow rate of wastewater at outlet of adjustment tank ($m^3$/h) + TOC concentration of merging concentrated waste liquid (mg/L) $\times$ flow rate of merging concentrated waste liquid ($m^3$/h)} $\times$ 24 (h)/1000 Formula 1:

The "TOC concentration of merging concentrated waste liquid" in formula 1 may use the measurement result of the second pollution load measurement unit 18 directly, but it is preferable to use the TOC concentration of the concentrated waste liquid at the confluence point estimated in consideration of the retention time from the TOC concentration measurement position (for example, concentrated waste liquid tank 17) to the confluence point. For example, in the case where the time for the concentrated waste liquid to be discharged from the concentrated waste liquid tank 17 and reach the confluence point is 1 minute, the average of the TOC concentration measurement results of the second pollution load measurement unit 18 from the present time to 1 minute ago can be estimated as the "TOC concentration of merging concentrated waste liquid".

The calculation unit 6 determines whether there is a problem with the mixed liquid flowing into the wastewater treatment equipment 3 based on the estimated wastewater load at the wastewater treatment inlet section. In the case where the calculation unit 6 determines that the wastewater load is high (the wastewater load is equal to or greater than a predetermined value) and wastewater treatment may fail, the valve 21 is closed, the valve 12 is opened, the transfer pump 20 is stopped, and the concentrated waste liquid is kept stored in the concentrated waste liquid tank 17. The calculation unit 6 continues to estimate the wastewater load.

Thereafter, at the timing when the estimated wastewater load becomes low (the wastewater load becomes less than the predetermined value), the valve 21 is opened, and the transfer pump 20 is controlled to send the concentrated waste liquid from the concentrated waste liquid tank 17 to the wastewater outlet piping 24. The concentrated waste liquid from the concentrated waste liquid tank 17 is mixed with the wastewater from the adjustment tank 1, and flows into the wastewater treatment equipment 3 through the wastewater outlet piping 24. It is preferable to control the transfer pump 20 and adjust the flow rate and inflow timing of the concentrated waste liquid sent from the concentrated waste liquid tank 17 to the wastewater outlet piping 24 so that wastewater treatment does not fail. In this case, the concentrated waste liquid is sent to the wastewater outlet piping 24 while adjusting the flow rate and flow rate timing so that the estimated wastewater load does not exceed the predetermined value.

The calculation unit 6 may display the timing of starting/stopping the transfer pump 20 on a monitor screen or the like for the operator to manually operate the transfer pump 20 according to the display.

According to the present embodiment, the pollution load (or items correlated with the pollution load) and flow rate of wastewater continuously measured on the upstream side of the adjustment tank 1, and the pollution load (or items correlated with the pollution load) and flow rate of the concentrated waste liquid that directly flows to wastewater treatment

on the downstream side of the adjustment tank 1 are grasped, and by adding the load from wastewater and the load from concentrated waste liquid, the wastewater load at the wastewater treatment inlet section is estimated. The flow rate and inflow timing of the concentrated waste liquid are adjusted based on this estimated value, thereby reducing the amount of industrial waste and stabilizing wastewater treatment.

[Second Embodiment]

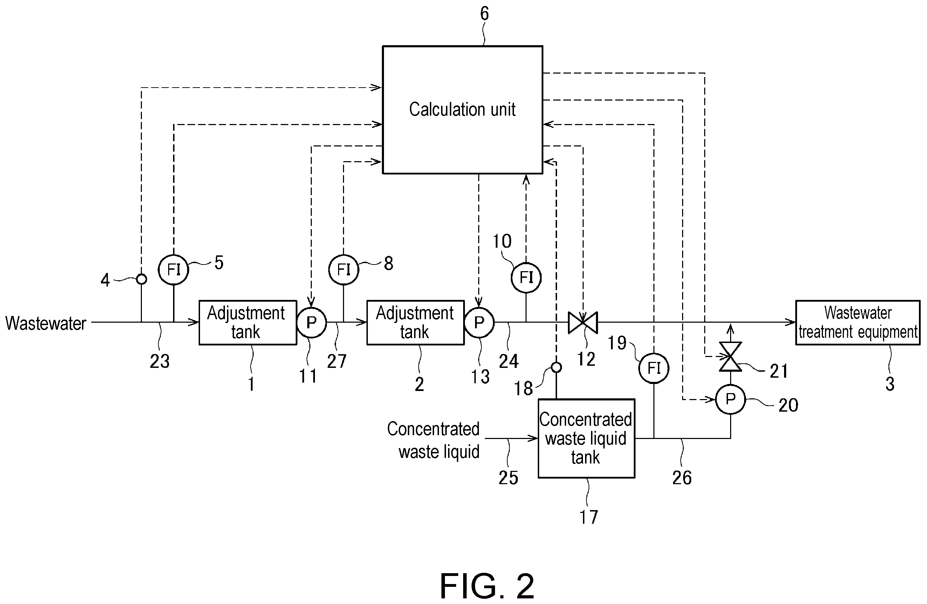

FIG. 2 shows a schematic configuration of a wastewater treatment system according to the second embodiment. The present embodiment differs from the first embodiment shown in FIG. 1 in that an adjustment tank 2 is provided in series with the adjustment tank 1 between the adjustment tank 1 and the wastewater treatment equipment 3. This wastewater treatment system includes relay piping 27 connected to the downstream side of the adjustment tank 1 for transferring wastewater to the adjustment tank 2, and a fourth flow rate measurement unit 8 provided in the relay piping 27 and measuring the flow rate of wastewater flowing into the adjustment tank 2. The specifications such as the capacity of the adjustment tank 2 are not particularly limited. Multiple adjustment tanks 2 may be arranged in parallel. In FIG. 2, the same parts as those in the first embodiment shown in FIG. 1 are denoted by the same reference numerals, and description thereof is omitted.

The wastewater sent from the adjustment tank 1 by the transfer pump 11 provided in the relay piping 27 flows into the adjustment tank 2 through the relay piping 27. The fourth flow rate measurement unit 8 measures the flow rate of wastewater flowing into the adjustment tank 2. The fourth flow rate measurement unit 8 may be a flow meter, or in the case of the adjustment tank 2 operating with batch flow, may calculate the flow rate from the water level increase per unit time in the adjustment tank 2. In the case of the adjustment tank 2 operating with continuous flow, the flow rate of wastewater flowing into the adjustment tank 2 may be calculated from the sum of the change in storage amount in the adjustment tank 2 and the discharge flow rate from the adjustment tank. In this case, it is required to install a level meter in the adjustment tank 2 as the fourth flow rate measurement unit 8.

A transfer pump 13 provided in the wastewater outlet piping 24 sends the wastewater in the adjustment tank 2 to the wastewater treatment equipment 3. The third flow rate measurement unit 10 measures the flow rate of wastewater at the outlet of the adjustment tank 2. On the downstream side of the third flow rate measurement unit 10, the wastewater sent from the adjustment tank 2 and a concentrated waste liquid merge and mix, and the mixed liquid flows into the wastewater treatment equipment 3 through the wastewater outlet piping 24.

In this configuration, the calculation unit 6 first estimates the TOC concentration at the outlet of the adjustment tank 1. Similar to the first embodiment shown in FIG. 1, the estimation methods differ depending on whether the adjustment tank 1 operates with continuous flow or batch flow. In the case of continuous flow, the TOC concentration (estimated value A) at the outlet of the adjustment tank 1 is estimated using the above estimation method (1)-1 or (2)-1, and in the case of batch flow, using estimation method (3)-1.

Next, the TOC concentration (estimated value B) at the outlet of the adjustment tank 2 is estimated from the TOC concentration (estimated value A) at the outlet of the adjustment tank 1 obtained as described above and the flow rate of wastewater flowing into the adjustment tank 2 measured by the fourth flow rate measurement unit 8. Here, the estimation methods also differ depending on whether the adjustment tank 2 operates with continuous flow or batch flow. In the case of continuous flow, the TOC concentration (estimated value B) at the outlet of the adjustment tank 2 is estimated using the following estimation method (1)-2 or (2)-2, and in the case of batch flow, using estimation method (3)-2.

Estimation Method (1)-2

The TOC concentration (mg/L) at the outlet of the adjustment tank 2 is estimated by calculating the moving average of the TOC concentration (estimated value A) over a time period close to the retention time in the adjustment tank 2.

Estimation Method (2)-2

The change in TOC concentration of the wastewater flowing into the adjustment tank 2 is estimated using a fully mixing tank model from the TOC concentration (estimated value A) and the flow rate into the adjustment tank 2, and the TOC concentration (mg/L) at the outlet of the adjustment tank 2 is estimated.

Estimation Method (3)-2

The TOC concentration (mg/L) at the outlet of the adjustment tank 2 is estimated by dividing the total TOC weight (g) flowing into the adjustment tank 2 by the total water volume ($m^3$) flowing into the adjustment tank 2.

The TOC concentration (estimated value B) at the outlet of the adjustment tank 2 obtained in this manner, the flow

rate of wastewater at the outlet of the adjustment tank 2 measured by the third flow rate measurement unit 10, and the TOC concentration and flow rate of concentrated waste liquid are used to estimate the wastewater load (kg-TOC/day) by the above formula 1. In the present embodiment, "outlet of adjustment tank" in formula 1 corresponds to the outlet of the adjustment tank 2.

The calculation unit 6 determines whether there is a problem with the mixed liquid flowing into the wastewater treatment equipment 3 based on the estimated wastewater load at the wastewater treatment inlet section. The calculation unit 6 controls the start and stop of the transfer pump 20 and the opening and closing of the valve 21, and adjusts the flow rate and inflow timing of the concentrated waste liquid sent from the concentrated waste liquid tank 17 to the wastewater outlet piping 24 so that wastewater treatment does not fail. In this case, the concentrated waste liquid is sent to the wastewater outlet piping 24 while adjusting the flow rate and flow rate timing so that the estimated wastewater load does not exceed a predetermined value.

Although FIG. 2 shows a configuration in which two stages of adjustment tanks (adjustment tank 1, adjustment tank 2) are arranged in series, three or more stages of adjustment tanks may be arranged in series. The more adjustment tanks are arranged in series, the longer it takes for the wastewater with the estimated wastewater load to actually reach the wastewater treatment equipment 3, which effectively allows countermeasures to be taken before the wastewater load exceeds the predetermined value.

[Third Embodiment]

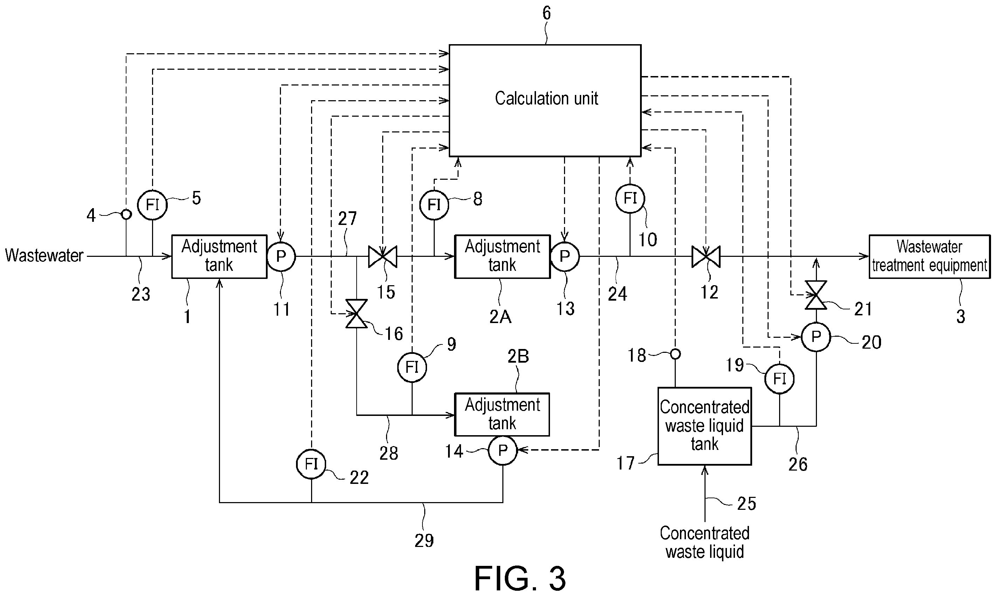

FIG. 3 shows a schematic configuration of a wastewater treatment system according to the third embodiment. The present embodiment differs from the second embodiment shown in FIG. 2 in that an adjustment tank 2B is provided in parallel to an adjustment tank 2A (corresponding to the adjustment tank 2 in FIG. 2), and wastewater is returned from the adjustment tank 2B to the adjustment tank 1. This wastewater treatment system further includes branch piping 28 that branches from the relay piping 27 and connects to the adjustment tank 2B, return piping 29 that is connected to the downstream side of the adjustment tank 2B and returns wastewater to the adjustment tank 1, a fifth flow rate measurement unit 9 that is provided in the branch piping 28 and measures the flow rate of wastewater flowing into the adjustment tank 2B, and a sixth flow rate measurement unit 22 that is provided in the return piping 29 and measures the flow rate of wastewater discharged from the adjustment tank 2B. The specifications such as the capacities of the adjustment tanks 2A and 2B are not particularly limited. In FIG. 3, the same parts as those in the second embodiment shown in FIG. 2 are denoted by the same reference numerals, and description thereof is omitted.

The wastewater sent from the adjustment tank 1 by the transfer pump 11 provided in the relay piping 27 branches and flows into the adjustment tank 2A or 2B. The destination for wastewater from the adjustment tank 1 is switched by controlling the opening and closing of a valve 15 provided on the downstream side of the branch point in the relay piping 27 and a valve 16 provided in the branch piping 28. The fourth flow rate measurement unit 8 provided in the relay piping 27 measures the flow rate of wastewater flowing into the adjustment tank 2A. The fifth flow rate measurement unit 9 provided in the branch piping 28 measures the flow rate of wastewater flowing into the adjustment tank 2B. The fourth flow rate measurement unit 8 and the fifth flow rate measurement unit 9 may be flow meters, or in the case of the adjustment tanks 2A and 2B operating with batch flow, may calculate the flow rate from the water level increase per unit time in the adjustment tanks 2A and 2B. In the case of calculating the flow rate from the water level increase per unit time in the adjustment tanks 2A and 2B, it is required to install level meters respectively in the adjustment tanks 2A and 2B as the fourth flow rate measurement unit 8 and the fifth flow rate measurement unit 9.

A transfer pump 13 provided in the wastewater outlet piping 24 sends the wastewater in the adjustment tank 2A to the wastewater treatment equipment 3. The third flow rate measurement unit 10 provided in the wastewater outlet piping 24 measures the flow rate of wastewater at the outlet of the adjustment tank 2A. On the downstream side (rear side) of the third flow rate measurement unit 10, the wastewater sent from the adjustment tank 2A and a concentrated waste liquid merge and mix, and the mixed liquid flows into the wastewater treatment equipment 3 through the wastewater outlet piping 24.

A transfer pump 14 provided in the return piping 29 returns the wastewater in the adjustment tank 2B to the adjustment tank 1.

The sixth flow rate measurement unit 22 provided in the return piping 29 measures the flow rate of wastewater returned from the adjustment tank 2B to the adjustment tank 1, and the flow rate may be measured with a flow meter or may be calculated from the water level decrease per unit time in the adjustment tank 2B. In the case of calculating the flow rate from the water level decrease per unit time in the adjustment tank 2B, it is required to install a level meter in the adjustment tank 2B as the fifth flow rate measurement unit 9.

The present embodiment has a condition that the adjustment tank 2B that returns wastewater to the adjustment tank 1 operates with batch flow, and the adjustment tank 1 and the adjustment tank 2A may operate with either continuous flow or batch flow. One or more adjustment tanks 2A are provided, and multiple adjustment tanks 2A may be arranged in parallel.

In this configuration, the calculation unit 6 first estimates the TOC concentration (estimated value C) of wastewater in the adjustment tank 2B from the TOC concentration measured by the first pollution load measurement unit 4 on the upstream side of the adjustment tank 1 and the flow rate measured by the fifth flow rate measurement unit 9 by the following estimation method (3)-3.

Estimation Method (3)-3

The TOC concentration (mg/L) of the adjustment tank 2B is estimated by dividing the total TOC weight (g) flowing into the adjustment tank 2B by the total water volume ($m^3$) flowing into the adjustment tank 2B.

Next, the calculation unit 6 estimates the TOC concentration (estimated value D) at the outlet of the adjustment tank 1 from the TOC concentration (estimated value C) of the adjustment tank 2B obtained as described above, the flow rate measured by the sixth flow rate measurement unit 22, the TOC concentration measured by the first pollution load measurement unit 4 on the upstream side of the adjustment tank 1, and the flow rate measured by the first flow rate measurement unit 5. In the case of the adjustment tank 1 operating with continuous flow, estimation is performed using estimation method (2)-3, and in the case of the adjustment tank 1 operating with batch flow, estimation is performed using estimation method (3)-4.

Estimation Method (2)-3

The change in wastewater concentration flowing into the adjustment tank 1 is estimated using a fully mixing tank model from the TOC concentration measured by the first pollution load measurement unit 4 and the flow rate measured by the first flow rate measurement unit 5, the TOC concentration (estimated value C) of the adjustment tank 2B, and the flow rate flowing from the adjustment tank 2B into the adjustment tank 1, and the TOC concentration (mg/L) at the outlet of the adjustment tank 1 is estimated.

Estimation Method (3)-4

The TOC concentration (mg/L) at the outlet of the adjustment tank 1 is estimated by dividing the total TOC weight (g) flowing into the adjustment tank 1 by the total water volume ($m^3$) flowing into the adjustment tank 1. The total TOC weight and total water volume are calculated by adding the TOC weight and water volume returned from the adjustment tank 2B to the TOC weight and water volume measured on the upstream side of the adjustment tank 1, respectively.

Next, the calculation unit 6 estimates the TOC concentration (estimated value E) at the outlet of the adjustment tank 2A from the TOC concentration (estimated value D) at the outlet of the adjustment tank 1 obtained as described above and the flow rate flowing into the adjustment tank 2A. In the case of the adjustment tank 2A operating with continuous flow, the TOC concentration (estimated value E) at the outlet of the adjustment tank 2A is estimated using estimation method (1)-3 or (2)-4, and in the case of batch flow, using estimation method (3)-5.

Estimation Method (1)-3

The TOC concentration (mg/L) at the outlet of the adjustment tank 2A is estimated by calculating the moving average of the TOC concentration (estimated value D) over a time period close to the retention time in the adjustment tank 2A.

Estimation Method (2)-4

The change in wastewater concentration flowing into the adjustment tank 2A is estimated using a fully mixing tank model from the TOC concentration (estimated value D) and the flow rate flowing into the adjustment tank 2A, and the TOC concentration (mg/L) at the outlet of the adjustment tank 2A is estimated.

Estimation Method (3)-5

The TOC concentration (mg/L) at the outlet of the adjustment tank 2A is estimated by dividing the total TOC weight (g) flowing into the adjustment tank 2A by the total water volume ($m^3$) flowing into the adjustment tank 2A.

The TOC concentration (estimated value E) at the outlet of the adjustment tank 2A obtained in this manner, the flow rate measured by the third flow rate measurement unit 10, and the TOC concentration and flow rate of concentrated waste liquid are used to estimate the wastewater load (kg-TOC/day) by the above formula 1. In the present invention embodiment, "outlet of adjustment tank" in formula 1 corresponds to the outlet of the adjustment tank 2A.

The calculation unit 6 determines whether there is a problem with the mixed liquid flowing into the wastewater

treatment equipment 3 based on the estimated wastewater load at the wastewater treatment inlet section. The calculation unit 6 controls the start and stop of the transfer pump 20 and the opening and closing of the valve 21, and adjusts the flow rate and inflow timing of the concentrated waste liquid sent from the concentrated waste liquid tank 17 to the wastewater outlet piping 24 so that wastewater treatment does not fail. In this case, the concentrated waste liquid is sent to the wastewater outlet piping 24 while adjusting the flow rate and flow rate timing so that the estimated wastewater load does not exceed a predetermined value.

[Fourth Embodiment]

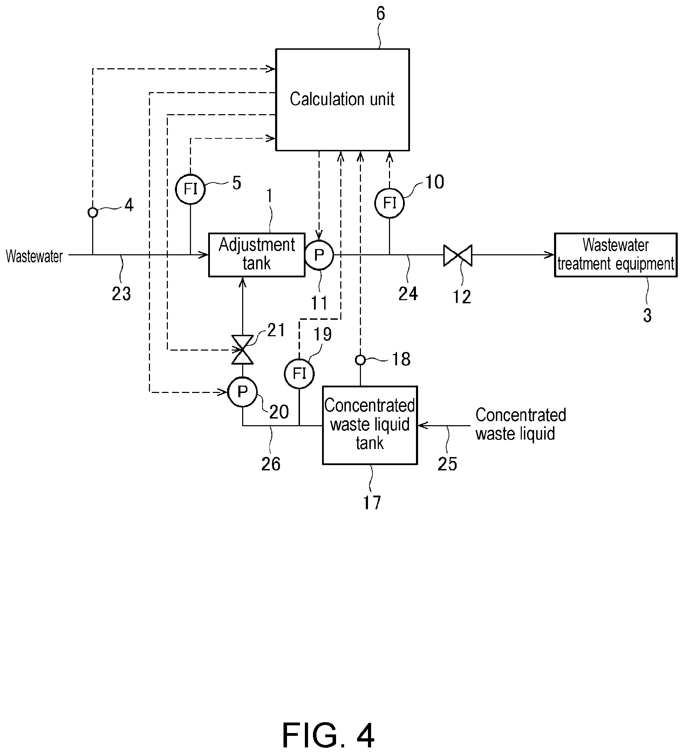

FIG. 4 shows a schematic configuration of a wastewater treatment system according to the fourth embodiment. The present embodiment differs from the first embodiment shown in FIG. 1 in that the concentrated waste liquid sent from the concentrated waste liquid tank 17 merges into the adjustment tank 1 instead of the wastewater outlet piping 24. In FIG. 4, the same parts as those in the first embodiment shown in FIG. 1 are denoted by the same reference numerals, and description thereof is omitted.

In this configuration, concentrated waste liquid outlet piping 26 merges the concentrated waste liquid discharged from the concentrated waste liquid tank 17 into the adjustment tank 1. Wastewater and the concentrated waste liquid are mixed in the adjustment tank 1 to form a mixed liquid, and the mixed liquid discharged from the adjustment tank 1 flows to the wastewater treatment through the wastewater outlet piping 24.

The calculation unit 6 estimates the TOC concentration (derived from raw water) at the outlet of the adjustment tank 1 using the TOC concentration measured by the pollution load measurement unit 4 and the flow rate measured by the first flow rate measurement unit 5. The "raw water" refers to the liquid in the adjustment tank 1 without concentrated waste liquid being merged thereinto.

The method for estimating the TOC concentration (derived from raw water) at the outlet of the adjustment tank 1 using the TOC concentration measured by the pollution load measurement unit 4 (TOC concentration measured upstream of the adjustment tank 1) and the flow rate measured by the first flow rate measurement unit 5 can be performed using various proposed concentration calculation models for retention tanks. For example, different estimation methods as described below can be used depending on whether the adjustment tank 1 operates with continuous flow or batch flow.

<In the Case of Continuous Flow>

Estimation Method (1)-4

The TOC concentration (derived from raw water) (mg/L) at the outlet of the adjustment tank 1 is estimated by calculating the moving average of the TOC concentration measured upstream of the adjustment tank 1 over a time period close to the retention time in the adjustment tank 1. For example, in the case of the retention time in the adjustment tank 1 being 50 minutes, the average of TOC concentration measurement results obtained upstream of the adjustment tank 1 from the present time to 50 minutes ago can be regarded as the TOC concentration (derived from raw water) discharged from the adjustment tank 1.

Estimation Method (2)-5

The change in TOC concentration of wastewater flowing into the adjustment tank 1 is estimated using a fully mixing tank model from the TOC concentration and flow rate measured upstream of the adjustment tank 1, and the TOC concentration (derived from raw water) (mg/L) at the outlet of the adjustment tank 1 is estimated.

<In the Case of Batch Flow>

Estimation Method (3)-6

The TOC concentration (derived from raw water) (mg/L) at the outlet of the adjustment tank 1 is estimated by dividing the total TOC weight (g) flowing into the adjustment tank 1 by the total water volume ($m^3$) flowing into the adjustment tank 1. In order to accurately grasp the total TOC weight and total water volume that have flowed into the adjustment tank 1, it is desirable to obtain the inlet valve opening/closing signals or pump start/stop signals of the adjustment tank 1, and integrate the TOC concentration (derived from raw water) and water volume from inlet valve "open" to "close" or during the time the pump is operating, to calculate the load. In the case where it is difficult to obtain valve opening/closing signals or pump start/stop signals, the timing of wastewater flowing into the adjustment tank 1 may be understood from the change in water level of the adjustment tank 1.

The calculation unit 6 uses the TOC concentration (derived from raw water) at the outlet of the adjustment tank 1

estimated by any of the above estimation methods (1)-4, (2)-5, and (3)-6, the flow rate at the outlet of the adjustment tank 1 measured by the third flow rate measurement unit 10, the TOC concentration of the concentrated waste liquid measured by the second pollution load measurement unit 18, and the flow rate of the concentrated waste liquid discharged from the concentrated waste liquid tank 17 measured by the second flow rate measurement unit 19, to estimate the wastewater load (kg-TOC/day) at the wastewater treatment inlet section.

In the case of merging the concentrated waste liquid upstream of the third flow rate measurement unit 10, the flow rate of wastewater (mixed liquid) at the outlet of the adjustment tank 1 is a flow rate obtained by adding the flow rate derived from raw water and the flow rate of concentrated waste liquid, and therefore the wastewater load is estimated by the following formula 2.

Formula 2: Wastewater load (kg-TOC/day) = [TOC concentration (derived from raw water) at outlet of adjustment tank (mg/L) × {flow rate of wastewater (mixed liquid) at outlet of adjustment tank ($m^3$/h) - flow rate of concentrated waste liquid ($m^3$/h)} + TOC concentration of merging concentrated waste liquid (mg/L) × flow rate of merging concentrated waste liquid ($m^3$/h)] × 24(h)/1000

In the present embodiment, the concentrated waste liquid is merged and mixed into the adjustment tank 1, but the concentrated waste liquid may be merged on the downstream side of the adjustment tank 1 as long as it is upstream of the third flow rate measurement unit 10. In that case, the wastewater load can still be estimated by formula 2. In this case, it is desirable that the "TOC concentration of merging concentrated waste liquid" in formula 2 also takes into consideration the retention time from when the concentrated waste liquid merges into the adjustment tank 1 to the point where the concentrated waste liquid is calculated as wastewater load. For example, in the case of the retention time from when the concentrated waste liquid merges to the point where the concentrated waste liquid is calculated as wastewater load being 30 minutes, the average of the TOC concentration measurement results of the second pollution load measurement unit 18 from the present time to 30 minutes ago can be estimated as the "TOC concentration of merging concentrated waste liquid".

[Fifth Embodiment]

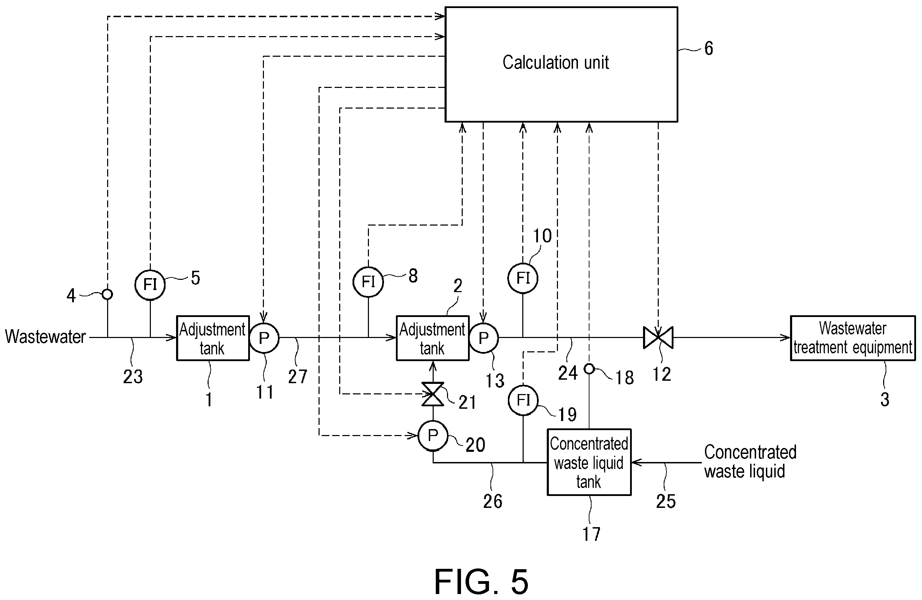

FIG. 5 shows a schematic configuration of a wastewater treatment system according to the fifth embodiment. The present embodiment differs from the second embodiment shown in FIG. 2 in that the concentrated waste liquid sent from the concentrated waste liquid tank merges into the adjustment tank 2 instead of the wastewater outlet piping 24. In FIG. 5, the same parts as those in the second embodiment shown in FIG. 2 are denoted by the same reference numerals, and description thereof is omitted.

In this configuration, the concentrated waste liquid outlet piping 26 merges the concentrated waste liquid discharged from the concentrated waste liquid tank 17 into the adjustment tank 2. Wastewater and the concentrated waste liquid are mixed in the adjustment tank 2 to form a mixed liquid, and the mixed liquid discharged from the adjustment tank 2 flows to the wastewater treatment through the wastewater outlet piping 24.

The calculation unit 6 first estimates the TOC concentration (estimated value A) at the outlet of the adjustment tank 1 using the above estimation method (1)-1 or (2)-1 in the case of continuous flow, or estimation method (3)-1 in the case of batch flow, similar to the second embodiment.

Next, the TOC concentration (derived from raw water) (estimated value B) at the outlet of the adjustment tank 2 is estimated from the TOC concentration (estimated value A) at the outlet of the adjustment tank 1 obtained as described above and the flow rate of wastewater flowing into the adjustment tank 2 measured by the fourth flow rate measurement unit 8. Here, the estimation methods also differ depending on whether the adjustment tank 2 operates with continuous flow or batch flow. The TOC concentration (derived from raw water) (estimated value B) at the outlet of the adjustment tank 2 is estimated using the following estimation method (1)-5 or (2)-6 in the case of continuous flow, and in the case of batch flow, using estimation method (3)-7.

Estimation Method (1)-5

The TOC concentration (derived from raw water) (mg/L) at the outlet of the adjustment tank 2 is estimated by calculating the moving average of the TOC concentration (estimated value A) over a time period close to the retention time in the adjustment tank 2.

Estimation Method (2)-6

The change in wastewater concentration flowing into the adjustment tank 2 is estimated using a fully mixing tank model from the TOC concentration (estimated value A) and the flow rate flowing into the adjustment tank 2, and the TOC concentration (derived from raw water) (mg/L) at the outlet of the adjustment tank 2 is estimated.

Estimation Method (3)-7

The TOC concentration (derived from raw water) (mg/L) at the outlet of the adjustment tank 2 is estimated by dividing the total TOC weight (g) flowing into the adjustment tank 2 by the total water volume ($m^3$) flowing into the adjustment tank 2.

The TOC concentration (derived from raw water) (estimated value B) at the outlet of the adjustment tank 2 obtained in this manner, the flow rate of wastewater at the outlet of the adjustment tank 2 measured by the third flow rate measurement unit 10, and the TOC concentration and flow rate of concentrated waste liquid are used to estimate the wastewater load (kg-TOC/day). In the case of merging the concentrated waste liquid upstream of the third flow rate measurement unit 10, the flow rate of wastewater (mixed liquid) at the outlet of the adjustment tank 2 is a flow rate obtained by adding the flow rate derived from raw water and the flow rate of concentrated waste liquid, and therefore the wastewater load is estimated by the above formula 2.

In the present embodiment, the concentrated waste liquid is merged and mixed into the adjustment tank 2, but the concentrated waste liquid may be merged at any position on the downstream side of the adjustment tank 1 as long as it is upstream of the third flow rate measurement unit 10. In that case, the wastewater load can still be estimated by formula 2.

The first to fifth embodiments described above illustrate configurations in which the calculation unit 6 performs calculations such as estimation of pollution load at the outlet of the adjustment tank and estimation of wastewater load at the wastewater treatment inlet section. Nevertheless, the calculation unit 6 may be configured with one computer, or may perform distributed processing with multiple computers.

Although the present invention has been described in detail using specific aspects, it will be apparent to those skilled in the art that various modifications are possible without departing from the spirit and scope of the present invention.

The present application is based on Japanese Patent Application No. 2023-191699 filed on November 9, 2023, which is incorporated herein by reference in its entirety. Description of Reference Numerals

1, 2, 2A, 2B adjustment tank 3 wastewater treatment equipment
4 first pollution load measurement unit
5 first flow rate measurement unit
6 calculation unit
8 fourth flow rate measurement unit
9 fifth flow rate measurement unit
10 third flow rate measurement unit
11, 13, 14, 20 transfer pump
17 concentrated waste liquid tank
18 second pollution load measurement unit
19 second flow rate measurement unit
22 sixth flow rate measurement unit
23 wastewater inlet piping
24 wastewater outlet piping
25 concentrated waste liquid inlet piping
26 concentrated waste liquid outlet piping
27 relay piping
28 branch piping
29 return piping

## Claims

**1.** A method for estimating a wastewater load at a wastewater treatment inlet section of wastewater treatment equipment that treats a mixed liquid resulting from confluence of wastewater and a concentrated waste liquid, the method comprising:

measuring a first pollution load of the wastewater;
estimating a pollution load derived from the wastewater at a confluence point of the wastewater and the concentrated waste liquid, or at a predetermined position downstream of the confluence point based on the first pollution load;
measuring a second pollution load of the concentrated waste liquid;
estimating a pollution load of the concentrated waste liquid at the confluence point or the predetermined position

based on the second pollution load; and
estimating the wastewater load based on an estimated value of the pollution load derived from the wastewater and an estimated value of the pollution load of the concentrated waste liquid at the confluence point or the predetermined position.

**2.** The method for estimating a wastewater load according to claim 1, wherein:

the wastewater is sent to the wastewater treatment equipment via an adjustment tank,
the confluence point is located on a downstream side of the adjustment tank, and
the method comprising:
measuring the first pollution load on an upstream side of the adjustment tank.

**3.** The method for estimating a wastewater load according to claim 2, comprising:

measuring a first flow rate of wastewater flowing into the adjustment tank; and
estimating a pollution load of the wastewater at the confluence point using the first pollution load and the first flow rate.

**4.** The method for estimating a wastewater load according to claim 1, wherein:

the concentrated waste liquid is sent from a concentrated waste liquid tank to the confluence point, and
the method comprising:

measuring the second pollution load in the concentrated waste liquid tank;
measuring a second flow rate of the concentrated waste liquid discharged from the concentrated waste liquid tank; and
estimating a pollution load of the concentrated waste liquid at the confluence point from the second pollution load and the second flow rate, considering a retention time from the concentrated waste liquid tank to the confluence point.

**5.** A method for treating wastewater, wherein the concentrated waste liquid is not sent to the confluence point in the case where the wastewater load estimated by the method according to claim 1 is equal to or greater than a predetermined value.

**6.** The method for treating wastewater according to claim 5, wherein:
the concentrated waste liquid is sent to the confluence point at a flow rate that does not exceed the predetermined value in the case where the estimated wastewater load is less than the predetermined value.

6
Calculation unit
4
FI
5
FI
10
Wastewater
Adjustment tank
P
11
24
12
Wastewater treatment equipment
23
1
19
21
3
FI
18
P
20
Concentrated waste liquid
Concentrated waste liquid tank
25
26
17

FIG. 1

Wastewater
4
23
FI
5
Adjustment tank
1
P
11
27
FI
8
Adjustment tank
2
P
13
24
FI
10
Calculation unit
6
12
18
Concentrated waste liquid
25
Concentrated waste liquid tank
17
FI
19
26
P
20
21
Wastewater treatment equipment
3

FIG. 2

6
Calculation unit
4
FI
5
FI
8
FI
10
Wastewater
Adjustment tank
P
27
Adjustment tank
P
Wastewater treatment equipment
23
1
11
15
2A
13
24
12
21
3
16
9
FI
2B
P
20
18
19
FI
Adjustment tank
Concentrated waste liquid tank
FI
22
28
14
P
17
26
25
29
Concentrated waste liquid

FIG. 3

6
Calculation unit
FI
5
4
1
FI
10
Wastewater
Adjustment tank
P
Wastewater treatment equipment
23
11
24
12
3
21
19
18
FI
P
20
Concentrated waste liquid tank
Concentrated waste liquid
26
25
17

FIG. 4

Calculation unit
6
4
FI
5
FI
8
2
10
FI
Wastewater
Adjustment tank
P
Adjustment tank
P
Wastewater treatment equipment
23
1
11
27
13
24
18
12
3
21
FI
19
P
20
Concentrated waste liquid tank
Concentrated waste liquid
26
25
17

FIG. 5

**INTERNATIONAL SEARCH REPORT**

International application No. **PCT/JP2024/033268**

**A. CLASSIFICATION OF SUBJECT MATTER**

***C02F 1/00***(2023.01)i; ***C02F 3/12***(2023.01)i
FI: C02F1/00 D; C02F1/00 C; C02F3/12 H

According to International Patent Classification (IPC) or to both national classification and IPC

**B. FIELDS SEARCHED**

Minimum documentation searched (classification system followed by classification symbols)

C02F1/00; C02F3/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JST7580/JSTChina (JDreamIII)

**C. DOCUMENTS CONSIDERED TO BE RELEVANT**

| Category* | Citation of document, with indication, where appropriate, of the relevant passages | Relevant to claim No. |
|---|---|---|
| Y | JP 51-120056 A (FUJISAWA PHARMACEUTICAL CO., LTD.) 21 October 1976 (1976-10-21) claims, p. 3, upper left column, line 10 to p. 5, lower right column, line 8, drawings | 1-6 |
| Y | JP 2023-001308 A (SWING CORP.) 04 January 2023 (2023-01-04) paragraphs [0024], [0056], [0065], fig. 1-9 | 1-6 |
| Y | JP 2001-129590 A (KURITA WATER IND LTD.) 15 May 2001 (2001-05-15) paragraphs [0030], [0033], fig. 1 | 1-6 |
| A | JP 7-008938 A (KAWASAKI STEEL CORP.) 13 January 1995 (1995-01-13) entire text, all drawings | 1-6 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 December 2024** | **17 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/033268**

| Patent document cited in search report | Publication date (day/month/year) | Patent family member(s) | Publication date (day/month/year) |
|---|---|---|---|
| JP 51-120056 A | 21 October 1976 | (Family: none) | |
| JP 2023-001308 A | 04 January 2023 | (Family: none) | |
| JP 2001-129590 A | 15 May 2001 | (Family: none) | |
| JP 7-008938 A | 13 January 1995 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11197664 A
- JP 2006334491 A
- JP 2023191699 A